# FASCICULE DE BREVET EUROPEEN

(11) **EP 1 215 377 B1**
(45) Date de publication et mention de la délivrance du brevet: **11.04.2012**
(21) Numéro de dépôt: 01403241.1
(22) Date de dépôt: 14.12.2001
(51) Int. Cl.: F02B 31/04, F01L 3/06

(54) **Système d'admission de gaz dans une chambre de combustion dont le conduit d'admission comporte une nervure**
Gaseinlasssystem für einen Brennkammer, dessen Einlasskanal eine Rille aufweist
System for admitting gas into a combustion chamber , the inlet conduit having a ridge

(30) Priorité: 15.12.2000 FR 0016364
(43) Date de publication de la demande: 19.06.2002
(73) Titulaire: Renault s.a.s., 92100 Boulogne Billancourt (FR)
(72) Inventeur: Jouvencel, Vincent, 72700 Spay (FR)

(56) Documents cités:
- EP-A- 0 281 015
- EP-A- 0 312 768
- EP-A- 0 926 330
- FR-A- 2 534 968
- US-A- 5 551 393

## Description

L'invention concerne un système d'admission de gaz dans au moins une chambre de combustion d'un cylindre d'un moteur à combustion.

Les moteurs à essence, notamment les moteurs à injection directe, permettent d'optimiser le fonctionnement du moteur avec des mélanges dits "pauvres", c'est-à-dire des mélanges carburés dans lesquels il existe un fort excès de gaz comburant, tel que de l'air, par rapport à la quantité de carburant introduite dans le cylindre.

L'utilisation des mélanges pauvres permet notamment de réduire de manière importante la consommation de carburant, mais aussi de réduire la température maximale atteinte au cours de la combustion, ce qui permet aussi de diminuer la production de substances polluantes telles que les oxydes d'azote (NOx).

De même, l'excés de gaz permet d'éviter qu'une partie du carburant reste imbrûlée après la combustion et soit évacuée avec les gaz d'échappement.

Dans les moteurs diesel, l'allumage se fait par auto-inflammation du carburant dans des zones dans lesquelles le mélange gaz/carburant est riche.

L'optimisation de la combustion dans les moteurs diesel implique notamment de favoriser le mélange air/carburant et d'amener ainsi de l'air autour des jets de carburant.

Dans ce but, il est connu de favoriser le mélange air/carburant par la formation dans le cylindre d'un mouvement tourbillonnaire dit de "swirl" dans lequel les gaz contenus dans le cylindre sont animés d'un mouvement global de rotation autour d'un axe sensiblement parallèle à l'axe du cylindre.

Pour aboutir à un fonctionnement optimal du moteur, il est nécessaire de considérer l'ensemble des paramètres qui régissent l'aérodynamique interne du cylindre, c'est-à-dire l'écoulement des différents fluides dans le cylindre au cours d'un cycle moteur, en tenant notamment compte de la forme de la culasse, des ouvertures et fermetures des soupapes d'admission et d'échappement, de la position et de l'orientation de l'injecteur et des mouvements alternatifs du piston.

Le mouvement tourbillonnaire est notamment créé en fin de compression, et particulièrement durant la phase d'injection du carburant, par l'écoulement des gaz dans la chambre de combustion réalisée dans la tête du piston.

Le mouvement de "swirl" créé au cours de la phase d'admission du carburant nécessite aussi un tracé particulier du système d'admission.

Les systèmes d'admission existant permettent l'obtention d'un mouvement de "swirl" à l'aide de conduits du type "hélicoïdal" ou "tangentiel". Des dispositifs agencés dans les conduits permettent aussi d'augmenter les turbulences. Il s'agit notamment d'un boisseau rotatif, d'une guillotine, d'un volet mobile, etc.

Cependant, une telle architecture de système d'admission provoque une dégradation de la perméabilité du système avec l'augmentation du mouvement de swirl.

La perméabilité étant définie comme étant le débit de passage des gaz dans l'orifice d'entrée d'une soupape lors de son ouverture.

Ainsi, lorsqu'un type de combustion nécessite un mouvement de swirl important, la perméabilité du système d'admission est réduite, ce qui entraîne une dégradation du remplissage en air des chambres de combustion du moteur.

Cela est notamment rencontré aux fortes charges. En effet, dans ce cas, la quantité des gaz admise dans le cylindre est inférieure à la quantité des gaz qui est nécessaire à la combustion optimale du mélange gaz/carburant

Le document EP-A-0.281.015 divulgue un système d'admission de gaz dans une chambre de combustion qui comporte une nervure qui est agencée au moins majoritairement à l'arrière de l'orifice de soupape du conduit d'admission de manière à détourner par déflexion une partie arrière, par rapport à leur direction d'écoulement, des gaz d'admission. Cependant, le changement de direction d'une partie arrière des gaz d'admission est susceptible de créer des turbulences et des pertes de charge provoquant une baisse de la perméabilité du système d'admission.

Dans le but de fournir une solution à ce problème, c'est-à-dire d'augmenter le compromis mouvement de swirl important/perméabilité du système d'admission, l'invention propose un système d'admission de gaz dans au moins une chambre de combustion d'un cylindre d'un moteur à combustion, qui comporte au moins un conduit d'admission des gaz, notamment d'air, qui débouche dans la chambre par un orifice de sortie obturé par une soupape d'admission excentrée par rapport àl'axe du cylindre, système dans lequel:
- un tronçon aval du conduit d'admission présente une courbure :
- le tronçon aval du conduit d'admission présente un premier plan médian passant par l'axe de la soupape d'admission, le premier plan médian étant parallèle à la direction d'écoulement des gaz dans le conduit :
- le tronçon aval du conduit d'admission présente un deuxième plan qui est orthogonal au premier plan médian et qui passe par l'axe de la soupape d'admission, le deuxième plan orthogonal délimitant une zone avant, par rapport à la direction de l'écoulement des gaz dans le conduit, déjà paroi intérieure du tronçon aval du conduit d'admission :
caractérisé en ce que ladite zone avant comporte une nervure qui s'étend dans un plan correspondant sensiblement à une section transversale du conduit et qui s'étend autour de l'axe de la soupape d'admission sur un secteur angulaire qui est entièrement compris dans ladite zone avant.

Selon d'autres caractéristiques de l'invention :
- la nervure est réalisée au moins partiellement lors de la réalisation par moulage du conduit d'admission ;
- la nervure est réalisée au moins partiellement par usinage de la paroi intérieure du conduit d'admission ;
- la nervure correspond à l'intersection de deux usinages ;
- l'un au moins des usinages est tronconique ;
- l'un au moins des usinages est ogivale ;
- la nervure est au moins partiellement rapportée sur la zone avant du tronçon aval ;
- la nervure est une arête vive ;
- l'arête vive comporte un profil en V ;
- la nervure s'étend sur un secteur angulaire de l'ordre de 120 degrés.

D'autres caractéristiques et avantages de l'invention apparaîtront à la lecture de la description détaillée qui suit pour la compréhension de laquelle on se reportera aux dessins annexés dans lesquels :
- la figure 1 représente une vue schématique en coupe axiale illustrant un cylindre d'un moteur équipé d'un système d'admission selon l'état de la technique ;
- la figure 2 représente une vue en coupe longitudinale d'un conduit d'admission dans lequel une nervure est réalisée par moulage, la nervure étant conformée selon l'état de la technique à des fins de compréhension de l'invention :
- la figure 3 représente une vue en coupe longitudinale d'un conduit d'admission dans lequel une nervure est réalisée par un usinage conformément à l'invention ;
- la figure 4 est une vue similaire à celle représenté à la figure précédente, la nervure étant réalisée par l'intersection de deux usinages conformément à l'invention ;
- la figure 5 est une vue en perspective du conduit d'admission représenté à la figure précédente ;
- la figure 6 est une vue de dessous du conduit d'admission représenté à la figure 4.

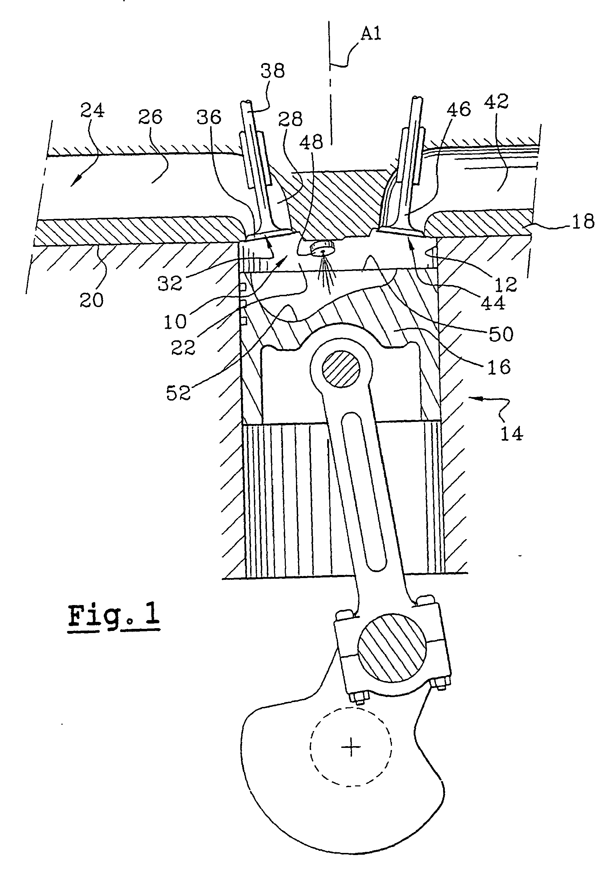

Afin de faciliter la compréhension de la description, on utilisera une orientation amont, aval correspondant à la direction générale de l'écoulement des gaz dans le système d'admission, de la gauche vers la droite conformément à la figure 1.

De façon similaire, une orientation arrière avant de l'extrémité aval du conduit d'admission sera utilisée.

La description traite d'un moteur diesel à injection directe, elle n'est cependant pas limitative. L'invention peut s'appliquer à différents types de moteurs tels qu'un moteur à essence à injection directe ou indirecte.

Le cylindre 10 est réalisé sous la forme d'un alésage 12 cylindrique d'axe vertical A1 aménagé dans un bloc-moteur 14. Un piston 16 est animé d'un mouvement alternatif axial dans l'alésage 12 et il délimite, vers le bas, le volume du cylindre. Le bloc-moteur 14 est recouvert d'une culasse 18 dont une face inférieure 20 délimite vers le haut le cylindre 10.

L'espace situé entre le piston 16, la culasse 18 et le cylindre 10 est appelé chambre de combustion 22.

La culasse du moteur comporte un conduit d'admission 24 des gaz, notamment d'air, dans le cylindre 10.

Le conduit d'admission 24, comporte ici un tronçon amont 26 et un tronçon aval 28.

Le conduit d'admission 24, débouche dans la chambre de combustion 22 par un premier orifice d'entrée 32 obturé par une soupape d'admission 36.

La soupape d'admission 36 est commandée par une queue 38 qui s'étend en aval du conduit d'admission 24 et qui en traverse la paroi.

Le premier orifice 32 est excentré par rapport à l'axe A1 du cylindre 10.

Par ailleurs, la culasse 18 comporte aussi un conduit d'échappement 42 des gaz brûlés qui s'ouvre par un premier orifice de sortie 44 dans la face inférieure 20 de la culasse. L'orifice de sortie 44 du conduit d'échappement 42 est destiné à être obturé par une soupape d'échappement 46 qui présente, par exemple, un diamètre supérieur au diamètre de la soupape d'admission 36.

S'agissant d'un moteur à injection directe, le cylindre 10 comporte aussi un injecteur de carburant dont le nez 48 débouche directement dans la chambre 22.

Comme on peut le voir sur la figure 1, le piston 16 comporte, dans sa face supérieure 50, un évidement concave 52 (aussi appelé bol) qui, en vue de dessus, présente une forme sensiblement circulaire. L'évidement 52 est excentré par rapport à l'axe A1 du cylindre. En effet, il est intéressant que l'injecteur et l'évidement 52 soient agencés de telle sorte que l'axe d'injection de carburant par l'injecteur arrive de manière à peu près tangentielle à la surface latérale de l'évidement 52, vers l'intérieur de celui-ci.

De façon à favoriser le mouvement tourbillonnaire de swirl dans la chambre de combustion 22, il est connu d'agencer à l'intérieur du conduit d'admission 24 des dispositifs, non représentés, tels que des boisseaux rotatifs, des guillotines ou des volets. Ces dispositifs provoquent des mouvements aérodynamiques des gaz à l'intérieur du conduit d'admission 24 qui favorisent le mouvement tourbillonnaire de swirl dans la chambre de combustion 22.

Cependant, ces dispositifs provoquent une perte de charge qui pénalise fortement la perméabilité du conduit d'admission 24, notamment lorsque le moteur fonctionne à forte charge. En effet, les turbulences formées dans le conduit d'admission 24 diminuent l'écoulement des gaz.

De façon à favoriser le mouvement de swirl sans pénaliser la perméabilité du système d'admission, une zone avant 60 de la paroi intérieure du tronçon aval 28 du conduit d'admission 24 comporte une nervure 62 qui s'étend dans un plan P correspondant sensiblement à une section transversale du conduit 24 dans la zone correspondante.

La nervure 62 permet de favoriser un mouvement de swirl important des gaz admis dans la chambre de combustion 22 sans diminuer, de façon importante, la perméabilité du système d'admission. Elle permet d'améliorer le guidage du flux de gaz lors de son entrée dans la chambre 22.

En effet, la nervure 62 modifié l'angle incident du flux de gaz par rapport à la paroi cylindrique de la chambre de combustion 22, ce qui augmente le mouvement tourbillonnaire de swirl sans diminuer la perméabilité du système d'admission.

La nervure 62 peut être réalisée sur la zone avant 60 de plusieurs façons.

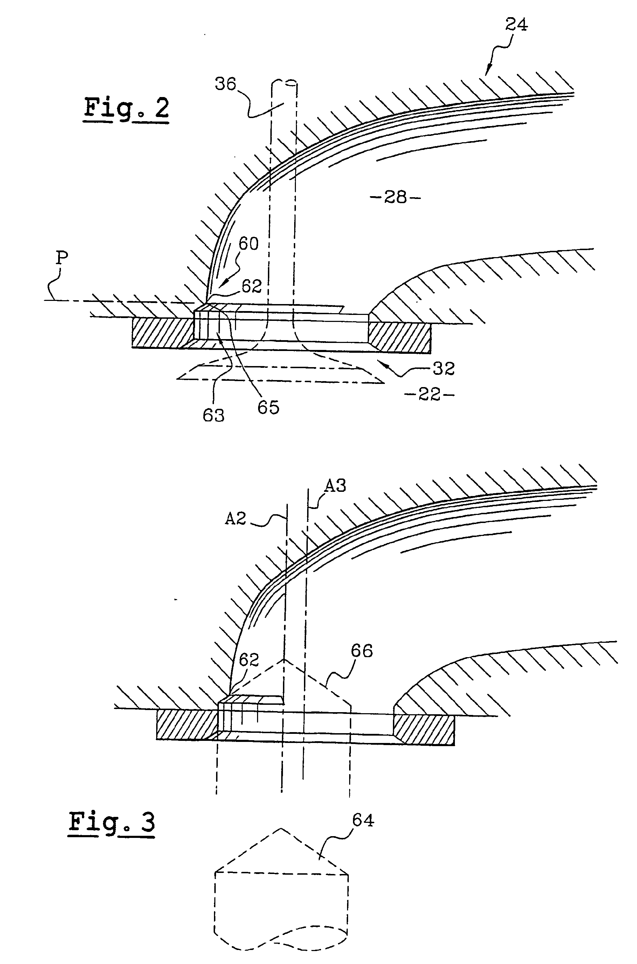

L'une d'entre elles consiste à réaliser la nervure 62 au moins partiellement lors de la réalisation par moulage du conduit d'admission 24. Dans ce cas, le noyau intérieur définissant du conduit d'admission 24 comporte une dépouille dont la forme en définit le profil 63 de la nervure 62 conformément à la figure 2.

Il est avantageux que la nervure 62 présente une arête vive 65, c'est-à-dire que son profil définisse un angle aigu dont l'arête sommitale est tranchante. Le profil de l'arête peut ainsi être en forme de V.

C'est l'existence de l'arête 65, ainsi que son positionnement sur la zone avant 60 du tronçon aval 28 du conduit d'admission 24, qui permettent la formation du mouvement tourbillonnaire de swirl sans diminuer la perméabilité du système d'admission.

La nervure 62 peut être réalisée au moins partiellement par usinage de la zone avant 60 de la paroi intérieure du conduit d'admission 24.

L'usinage peut par exemple être tronconique.

La figure 3 représente un outil 64 qui permet de réaliser un usinage 66 dans le conduit d'admission 24 pour réaliser la nervure 62.

Ici, conformément à la figure 3, l'axe A2 de révolution de l'outil n'est pas aligné avec l'axe A3 de la soupape 36. Ainsi, la nervure 62 ne s'étend pas sur la totalité de la périphérie du tronçon aval 28 du conduit d'admission 24, mais sur un secteur angulaire qui est avantageusement de l'ordre de 120 degrés.

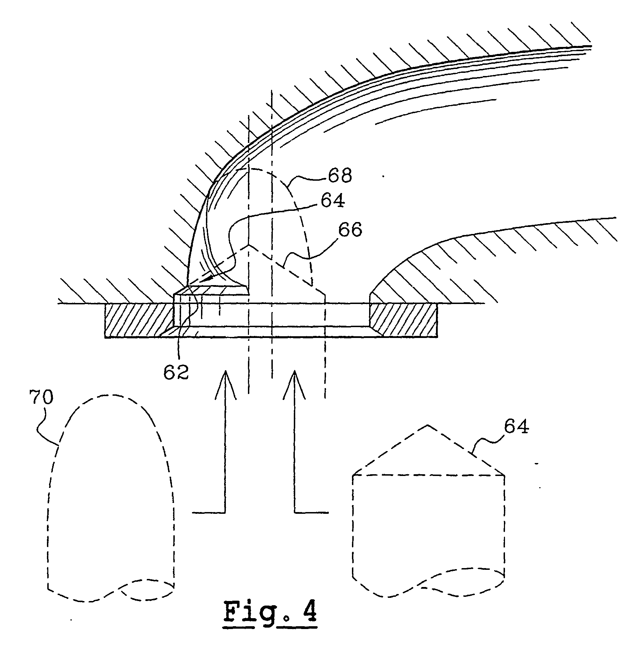

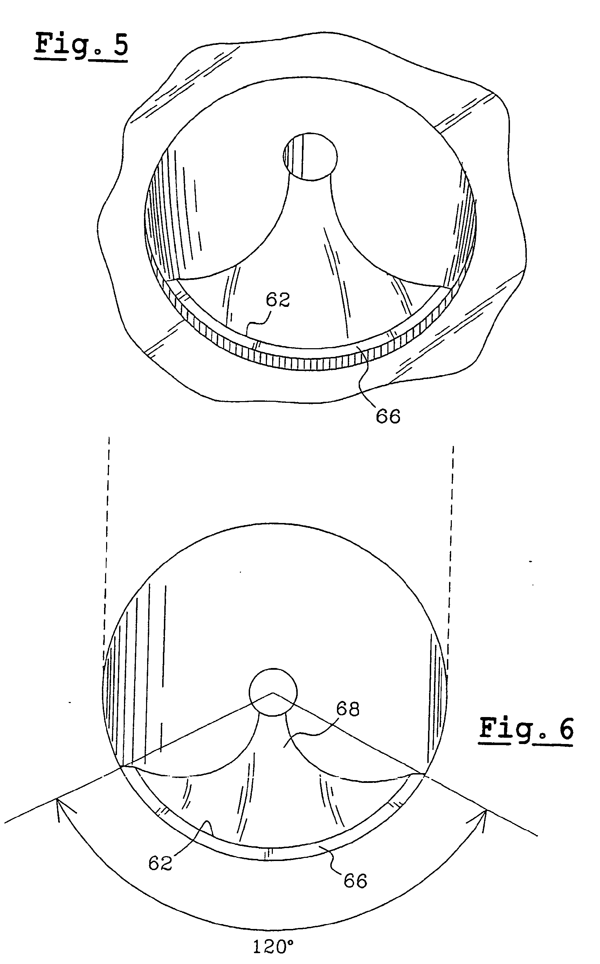

Selon une autre variante représentée aux figures 4 à 6 la nervure 62 correspond à l'intersection de deux usinages.

Par exemple, l'un des usinages est tronconique. Il est représenté par la référence 66 et est réalisé de façon similaire à celui décrit précédemment. L'autre usinage 68 est ogivale.

La figure 4 représente le conduit d'admission 24 qui comporte une nervure 62 réalisée par l'intersection des deux usinages 66 et 68 ainsi que les outils 64 et 70 permettant de les réaliser. Ici encore, la nervure 62 s'étend sur la zone avant 60 dé la paroi intérieure du tronçon aval du conduit d'admission 24 sur un secteur angulaire de l'ordre de 120 degrés.

La nervure 62 ainsi réalisée présente ainsi une arête vive permettant de favoriser le mouvement de swirl sans pénaliser le remplissage de la chambre de combustion 22.

La nervure 62 peut encore être rapportée sur la zone avant 60 du tronçon aval 28. Elle peut, par exemple, être soudée sur la zone avant 60 de la paroi intérieure du conduit d'admission 24.

Les réalisations décrites précédemment ne sont pas limitatives. De plus elles peuvent être combinées. Ainsi, par exemple, un tronçon de la nervure 62 peut être réalisé par moulage et un autre tronçon de la nervure 62 peut être réalisé par l'intersection des deux usinages 62 et 66.

Le système d'admission décrit comporte un premier orifice de sortie unique 32. Cependant, l'invention peut avantageusement s'appliquer un système d'admission dont le conduit d'admission comporte un tronçon amont qui se divise en un premier et un second tronçons aval. Une nervure 62 peut alors être réalisée sur la zone avant du premier et/ou du second tronçons aval.

## Revendications

1. Système d'admission de gaz dans au moins une chambre de combustion (22) d'un cylindre (10) d'un moteur à combustion, qui comporte au moins un conduit d'admission (24) des gaz, notamment d'air, qui débouche dans la chambre (22) par un orifice de sortie (32) obturé par une soupape d'admission (36) excentrée par rapport à l'axe (A1) du cylindre (10),
système dans lequel :
- un tronçon aval (28) du conduit d'admission (24) présente une courbure :
- le tronçon aval (28) du conduit d'admission (24) présente un premier plan médian passant par l'axe (A3) de la soupape d'admission (36), le premier plan médian étant parallèle à la direction d'écoulement des gaz dans le conduit (24) ;
- le tronçon aval (28) du conduit d'admission (24) présente un deuxième plan qui est orthogonal au premier plan médian et qui passe par l'axe (A3) de la soupape d'admission (36), le deuxième plan orthogonal délimitant une zone avant (60), par rapport à la direction de l'écoulement des gaz dans le conduit (24), de la paroi intérieure du tronçon aval (28) du conduit d'admission (24) :
**caractérisé en ce que** ladite zone avant (60) comporte une nervure (62) qui s'étend dans un plan (P) correspondant sensiblement à une section transversale du conduit (24) et qui s'étend autour de l'axe (A3) de la soupape d'admission (36) sur un secteur angulaire qui est entièrement compris dans ladite zone avant (60).

2. Système d'admission selon la revendication précédente, **caractérisé en ce que** la nervure (62) est réalisée au moins partiellement lors de la réalisation par moulage du conduit d'admission (24).

3. Système d'admission selon des revendications 1 ou 2, **caractérisé en ce que** la nervure (62) est réalisée au moins partiellement par usinage de la paroi intérieure du conduit d'admission (24).

4. Système d'admission selon la revendication précédente, **caractérisé en ce que** la nervure (62) correspond à l'intersection de deux usinages (66, 68).

5. Système d'admission selon l'une des revendications 3 ou 4 **caractérisé en ce que** l'un au moins des usinages (66) est tronconique.

6. Système d'admission selon l'une quelconque des revendications 3 à 5, **caractérisé en ce que** l'un au moins des usinages (68) est ogival.

7. Système d'admission selon l'une quelconque des revendications précédentes, **caractérisé en ce que** la nervure (62) est au moins partiellement rapportée sur la zone avant (60) du tronçon aval (28).

8. Système d'admission selon l'une quelconque des revendications précédentes, **caractérisé en ce que** la nervure (62) est une arête vive (65).

9. Système d'admission selon l'une quelconque revendication précédente, **caractérisé en ce que** l'arête vive (65) comporte un profil en V.

10. Système d'admission selon l'une quelconque des revendications précédentes, **caractérisé en ce que** la nervure (62) s'étend sur un secteur angulaire dé l'ordre de 120 degrés.

## Claims

1. Admission system for admitting gases into at least one combustion chamber (22) of a cylinder (10) of a combustion engine, which comprises at least one inlet duct (24) for admitting the gases, notably air, and which opens into the chamber (22) via an outlet orifice (32) closed off by an inlet valve (36) that is offset from the axis (A1) of the cylinder (10),
in which system:
- a downstream portion (28) of the inlet duct (24) has a curvature;
- the downstream portion (28) of the inlet duct (24) has a first midplane passing through the axis (A3) of the inlet valve (36), the first midplane being parallel to the direction in which the gases flow along the duct (24);
- the downstream portion (28) of the inlet duct (24) has a second plane which is orthogonal to the first midplane and which passes through the axis (A3) of the inlet valve (36), the second orthogonal plane delimiting a front zone (60), with respect to the direction in which the gases flow along the duct (24), of the interior wall of the downstream portion (28) of the inlet duct (24);
**characterized in that** the said front zone (60) comprises a ridge (62) which runs in a plane (P) corresponding substantially to a cross section of the duct (24) and which extends about the axis (A3) of the inlet valve (36) over an angular sector which is fully comprised within the said front zone (60).

2. Admission system according to the preceding claim, **characterized in that** the ridge (62) is produced at least partially as the inlet duct (24) is created by moulding.

3. Admission system according to Claims 1 or 2, **characterized in that that** the ridge (62) is produced at least partially by machining the interior wall of the inlet duct (24).

4. Admission system according to the preceding claim, **characterized in that** the ridge (62) corresponds to the intersection between two machined features (66, 68) .

5. Admission system according to one of Claims 3 or 4, **characterized in that** at least one of the machined features (66) is frustoconical.

6. Admission system according to any one of Claims 3 to 5, **characterized in that** at least one of the machined features (68) is ogival.

7. Admission system according to any one of the preceding claims, **characterized in that** the ridge (62) is at least partially attached to the front zone (60) of the downstream portion (28).

8. Admission system according to any one of the preceding claims, **characterized in that** the ridge (62) is a sharp edge (65).

9. Admission system according to any one of the preceding claims, **characterized in that** the sharp edge (65) has a V-profile.

10. Admission system according to any one of the preceding claims, **characterized in that** the ridge (62) extends over an angular sector of the order of 120 degrees.

## Patentansprüche

1. Gaseinlasssystem in mindestens einen Brennraum (22) eines Zylinders (10) eines Verbrennungsmotors, das mindestens einen Einlasskanal (24) der Gase, insbesondere von Luft, aufweist, der in den Raum (22) über eine Ausgangsöffnung (32) mündet, die von einem Einlassventil (36) verschlossen wird, das bezüglich der Achse (A1) des Zylinders (10) außermittig ist,
System, bei dem:
- ein hinterer Abschnitt (28) des Einlasskanals (24) eine Krümmung aufweist;
- der hintere Abschnitt (28) des Einlasskanals (24) eine erste Mittelebene aufweist, die durch die Achse (A3) des Einlassventils (36) geht, wobei die erste Mittelebene zur Strömungsrichtung der Gase im Kanal (24) parallel ist;
- der hintere Abschnitt (28) des Einlasskanals (24) eine zweite Ebene aufweist, die orthogonal zur ersten Mittelebene ist und durch die Achse (A3) des Einlassventils (36) geht, wobei die zweite orthogonale Ebene eine vordere Zone (60), bezüglich der Strömungsrichtung der Gase im Kanal (24), der Innenwand des hinteren Abschnitts (28) des Einlasskanals (24) definiert;
**dadurch gekennzeichnet, dass** die vordere Zone (60) eine Rippe (62) aufweist, die sich in einer Ebene (P) erstreckt, die im Wesentlichen einem Querschnitt des Kanals (24) entspricht und die sich um die Achse (A3) des Einlassventils (36) über einen Winkelsektor erstreckt, der ganz in der vorderen Zone (60) enthalten ist.

2. Einlasssystem nach dem vorhergehenden Anspruch, **dadurch gekennzeichnet, dass** die Rippe (62) zumindest teilweise bei der Herstellung durch Formen des Einlasskanals (24) hergestellt wird.

3. Einlasssystem nach den Ansprüchen 1 oder 2, **dadurch gekennzeichnet, dass** die Rippe (62) zumindest teilweise durch Bearbeitung der Innenwand des Einlasskanals (24) hergestellt wird.

4. Einlasssystem nach dem vorhergehenden Anspruch, **dadurch gekennzeichnet, dass** die Rippe (62) der Schnittstelle von zwei Bearbeitungen (66, 68) entspricht.

5. Einlasssystem nach einem der Ansprüche 3 oder 4, **dadurch gekennzeichnet, dass** mindestens eine der Bearbeitungen (66) kegelstumpfförmig ist.

6. Einlasssystem nach einem der Ansprüche 3 bis 5, **dadurch gekennzeichnet, dass** mindestens eine der Bearbeitungen (68) spitzbogenförmig ist.

7. Einlasssystem nach einem der vorhergehenden Ansprüche, **dadurch gekennzeichnet, dass** die Rippe (62) zumindest teilweise auf die vordere Zone (60) des hinteren Abschnitts (28) aufgesetzt ist.

8. Einlasssystem nach einem der vorhergehenden Ansprüche, **dadurch gekennzeichnet, dass** die Rippe (62) eine scharfe Kante (65) ist.

9. Einlasssystem nach einem vorhergehenden Anspruch, **dadurch gekennzeichnet, dass** die scharfe Kante (65) ein V-förmiges Profil aufweist.

10. Einlasssystem nach einem der vorhergehenden Ansprüche, **dadurch gekennzeichnet, dass** die Rippe (62) sich über einen Winkelsektor in der Größenordnung von 120 Grad erstreckt.
